# FASCICULE DE BREVET EUROPEEN

(11) **EP 1 827 880 B1**
(45) Date de publication et mention de la délivrance du brevet: **09.02.2011**
(21) Numéro de dépôt: 05813659.9
(22) Date de dépôt: 08.12.2005
(51) Int. Cl.: B60G 21/05

(54) **ESSIEU SOUPLE COMPRENANT UNE TRAVERSE À SECTION TRAPÉZOÏDALE, TRAVERSE, VÉHICULE ET PROCÉDÉ DE FABRICATION CORRESPONDANTS**
FLEXIBLE ACHSE MIT EINEM QUERTRÄGER MIT TRAPEZFÖRMIGEM QUERSCHNITT, ENTSPRECHENDER QUERTRÄGER, FAHRZEUG UND HERSTELLUNGSVERFAHREN
FLEXIBLE AXLE COMPRISING A CROSS-MEMBER WITH TRAPEZOID CROSS-SECTION, CORRESPONDING CROSS-MEMBER, VEHICLE AND MANUFACTURING METHOD

(30) Priorité: 08.12.2004 FR 0413084
(43) Date de publication de la demande: 05.09.2007
(73) Titulaire: Auto Chassis International SNC, 72086 Le Mans Cédex 9 (FR); ArcelorMittal Tubular Products Vitry, 51300 Vitry le François (FR)
(72) Inventeur: RIFFIER, Bruno, F-72210 FILLE SUR SARTHE (FR); FABBRO, Patrice, F-51300 VITRY LE FRANCOIS (FR); DESLANDE, Raymond, F-51300 LOISY SUR MARNE (FR); FOULQUIER, Jacques, F-72000 LE MANS (FR)
(74) Mandataire: Larcher, Dominique
(86) Numéro de dépôt international: PCT/EP2005/056618
(87) Numéro de publication internationale: WO 2006/061424

(56) Documents cités:
- EP-A- 0 752 332
- EP-A- 1 080 954
- US-A- 6 145 271

## Description

Le domaine de l'invention est celui des véhicules automobiles. Plus précisément, l'invention concerne les essieux souples pour les véhicules automobiles.

On rappelle qu'on désigne généralement par essieu souple un essieu conçu de façon à former un élément torsible entre deux roues.

Classiquement, un essieu souple comprend deux bras longitudinaux portant chacun un support de montage de roue et reliés par un élément de liaison transversale appelé traverse ou profil.

Au cours de la conception d'un essieu, deux grandeurs sont, entre autres, considérées pour apprécier la qualité de l'essieu : la flexion et la torsion.

Le principe des essieux souples permet de concilier une forte raideur en flexion et une relative souplesse en torsion. En général, c'est par la géométrie de la section de la traverse, via ses inerties de flexion et de torsion, qu'est obtenu le compromis souhaité entre raideur en flexion et souplesse (relative) de torsion.

Les sections choisies pour réaliser des traverses en acier (ou autre matériau isotrope) ont souvent des formes de « V », de « U », de « L », car ces types de géométrie présentent un rapport intéressant entre inertie de flexion et inertie de torsion.

Les dernières années ont vu un déploiement important de la technique des essieux souples sur les segments de gamme inférieure et moyenne de la construction automobile, grâce à de nombreux avantages, parmi lesquels un excellent compromis prestations/architecture, et une mise en oeuvre économique utilisant principalement des assemblages de type mécano soudé.

Ces avantages conduisent les concepteurs de liaison au sol à continuellement pousser la technique dans ses derniers retranchements. Les essieux souples sont en effet entachés d'un certain nombre de limitations parmi lesquelles un compromis délicat entre raideurs longitudinale et transversale et une durabilité conditionnée par la tenue en endurance de chacun de leurs composants, soumis à d'importantes déformations élastiques.

L'élévation permanente des exigences de confort et d'agrément de conduite oriente notamment la conception des essieux souples vers des solutions consistant à introduire une raideur de torsion entre les deux bras tirés, communément appelée « barre anti-dévers » ou « BAD », dans le but de limiter le dévers du véhicule en virage tout en préservant une grande souplesse verticale du train, garante du filtrage des imperfections de la chaussée vers la caisse.

Mais l'élargissement permanent du périmètre d'application de la technique des essieux souples vers des véhicules de forte masse (grosse berline, monospace voire véhicule utilitaire) sans pour autant transiger sur la qualité de prestation, rapprochent continuellement les composants les plus sollicités de leurs limites absolues de fonctionnement, que ce soit la résistance statique à des efforts incidents, ou la tenue en fatigue à un cycle de chargement représentatif de la vie du train.

L'élément de liaison, ou traverse, fait donc partie des composants les plus délicats à mettre au point, notamment sur le plan de l'endurance et du comportement.

Actuellement, sur les essieux souples, la traverse reliant les bras longitudinaux est réalisée suivant deux technologies différentes.

Selon une première technologie, la traverse est réalisée à partir d'un élément en tôle pliée (ou emboutie) de façon à lui procurer une section présentant une forme en « U », en « V » ou en « L ». Ces traverses nécessitent généralement d'être associées à une barre anti-dévers, apportant une raideur en torsion à l'essieu.

La deuxième technologie consiste à intégrer la fonction raideur anti-dévers à la traverse.

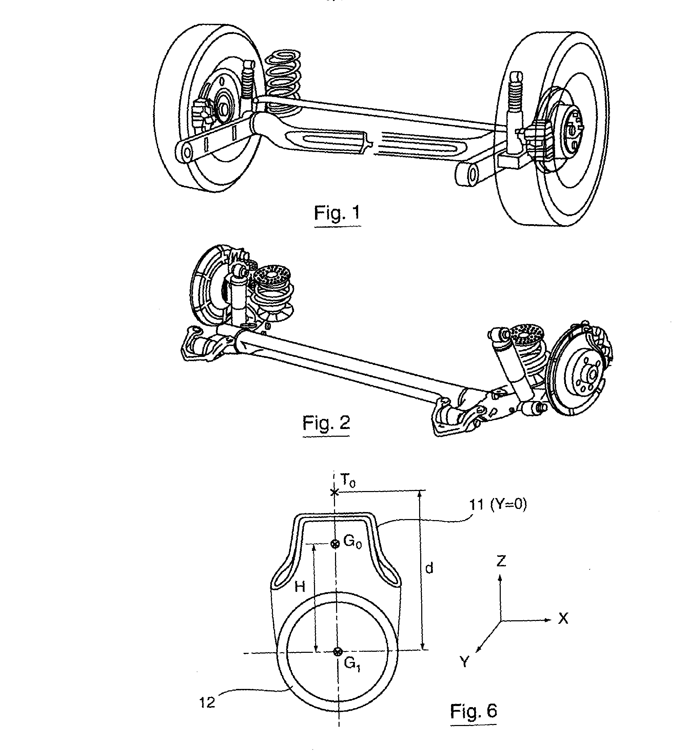

Dans ce cas, la traverse est fabriquée à partir d'un tube présentant généralement une section circulaire, le tube étant soumis au moins dans sa partie centrale à une étape de déformation (à l'issue de laquelle une portion de la paroi est écrasée contre une autre portion de la paroi) afin d'obtenir les raideurs souhaitées en torsion et flexion (exemple : Peugeot 806 (marques déposées), illustré par la figure 1, ou Opel Zafira (marques déposées), illustré par la figure 2).

La diversité de raideur anti-dévers en fonction des besoins est assurée par modification de la forme de la section de la traverse.

L'invention s'applique à des traverses réalisées selon cette deuxième technologie, celles-ci étant couramment désignés par les termes de « traverses à profil fermé » ou pat « traverses à section fermée ».

D'une façon générale, tous les essieux souples utilisant une traverse constituée d'un tube présentent dans leur région centrale une concavité ayant une section en forme de « U » ou de « V ».

Le tube de traverse est seulement « écrasé » dans une portion transversale pour diminuer sa raideur en torsion, et conserve des sections circulaires aux extrémités, pour faciliter la connexion au bras de suspension par soudage.

De plus, les traverses de ces essieux possèdent au moins une génératrice rectiligne de ce profil reliant les deux extrémités. Le document EP-0 752_3352 qui forme l'état de la technique le plus proche selon le préambule de la revendication 1, decrit un example d'essieu souple de ce type

Cette conception traditionnelle des traverses à section fermée a pour conséquence que le centre de torsion de la section médiane ne peut être très éloigné de l'axe initial du tube, du fait de sa géométrie. Seule une rotation de la traverse autour de son axe permet de modifier angulairement la position du centre de torsion.

Or, certaines exigences de constructeurs de véhicules quant aux comportements de l'essieu sont incompatibles avec un faible décalage entre le centre de torsion de l'essieu et l'axe du tube constitué par les centres des sections circulaires d'extrémité.

En effet, le niveau de braquage induit par le roulis est tel qu'il nécessite une translation verticale importante de la section centrale.

Par ailleurs, cette incompatibilité est dans certains cas accentuée par des contraintes d'architecture. Ces contraintes conduisent en effet dans certains cas à reconsidérer l'espace occupé par la traverse de l'essieu en fonction du parcours du tube d'échappement.

L'invention a notamment pour objectif de pallier les inconvénients de l'art antérieur.

Plus précisément, l'invention a pour objectif de proposer un essieu souple dont la traverse à profil ferme permette d'augmenter notablement la raideur en torsion de l'essieu par rapport aux solutions de l'art antérieur.

L'invention a régalement pour objectif de fournir un tel essieu qui puisse être adapté à de nouvelles architectures, notamment en ce qui concerne le parcours du tube d'échappement.

L'invention a aussi pour objectif de proposer un procédé de fabrication d'une traverse d'un tel essieu.

Ces objectifs, ainsi que d'autres qui apparaîtront par la suite, sont atteints grâce à l'invention qui a pour objet un essieu souple pour véhicule automobile, comprenant une traverse reliant deux bras longitudinaux, caractérisé en ce que ladite traverse présente une section fermée, et en ce que ladite traverse présente, dans une région centrale, une section de forme trapézoïdale.

De cette façon, on décale notablement le centre de torsion de l'essieu par rapport à un axe correspondant à l'axe du tube avant déformation de celui-ci.

Le comportement de l'essieu correspondant peut ainsi être sensiblement amélioré.

Selon une solution avantageuse, ladite traverse présente une section évolutive, ladite traversé présentant préférentiellement à chacune de ses extrémités une section circulaire.

Selon un mode de réalisation préférentiel, le centre d'inertie de la section centrale de ladite traverse est distant d'une droite passant par les centres d'inertie des sections d'extrémités de ladite traverse.

On réalise de cette façon un cintrage de la traverse dont l'effet s'ajoute à celui de la forme trapézoïdale de la section de à traverse en sa région centrale, contribuant donc à augmenter le décalage du centre de torsion et, par conséquent, la raideur de l'essieu.

De plus, les sections d'extrémité de la traverse peuvent ainsi être positionnées en dessous d'un tube d'échappement dans une architecture selon laquelle le parcours du tube d'échappement peut passer au-dessus de la traverse, en surmontant la section d'extrémité de la traverse du côté gauche du véhicule.

L'invention concerne également une traverse destinée à relier deux bras longitudinaux d'un essieu souple de véhicule automobile, caractérisé en cc qu'elle présente une section fermée, et en ce que ladite traverse présente, dans une région centrale, une section de forme trapézoïdale.

L'invention concerne aussi un véhicule équipé d'un essieu souple pour véhicule automobile, comprenant une traverse reliant deux bras longitudinaux, caractérisé en ce que ladite traverse présente une section fermée, et en ce que ladite traverse présente, dans une région centrale, une section de forme trapézoïdale.

L'invention concerne encore un procédé de fabrication d'une traverse destinée à relier deux bras longitudinaux d'un essieu souple de véhicule automobile, caractérisé en ce qu'il comprend une étape consistant à déformer une traverse présentant une section fermée de façon que ladite travers présente, dans une région centrale, une section de forme trapézoïdale.

Préférentiellement, le procédé comprend une phase de déformation de ladite traverse réalisée de façon que ladite traverse présente une section évolutive entre sa région centrale et ses deux sections d'extrémité.

Selon une solution avantageuse, ladite phase de déformation est réalisée en deux étapes, l'une consistant à réaliser une pré-déformation dans au moins une zone de transition entre ladite région centrale et une région de section circulaire au voisinage d'au moins une de ses extrémités, l'autre étape consistant à poursuivre la déformation dans ladite région centrale pour lui donner sa forme final.

Avantageusement, ladite phase de déformation est réalisée par emboutissage.

Préférentiellement, le procédé comprend une étape constatant à cintrer ladite traverse de façon que le centre d'inertie de la section centrale de ladite traverse soit distant d'une droite passant par les centres d'inertie des sections d'extrémités de ladite traverse.

D'autres caractéristiques et avantages de l'invention apparaîtront plus clairement à la lecture de la description suivante d'un mode de réalisation préférentiel de l'invention donné à titre d'exemple illustratif et non limitatif, et des dessins annexés parmi lesquels :
- les figures 1 et 2 sont chacune une vue d'un essieu comprenant une traverse à section fermée selon l'art antérieur ;
- la figure 3 est une vue en perspective d'un essieu souple selon l'invention ;
- la figure 4 est une vue en perspective d'une traverse d'un essieu souple selon l'invention ;
- la figure 5 est une vue partielle de l'essieu souple selon l'invention illustrée par la figure 3 ;
- la figure 6 est une vue de deux sections transversale de la traverse d'un essieu selon l'invention.

Tel que mentionné précédemment, le principe de l'invention réside dans le fait de réaliser un essieu souple à l'aide d'une traverse dont la section fermée présente, dans la région centrale de la traverse, une section de forme trapézoïdale.

On comprend qu'on entend par région centrale, une portion de la longueur de la traverse plus ou moins étendue, centrée entre les deux extrémités de la traverse.

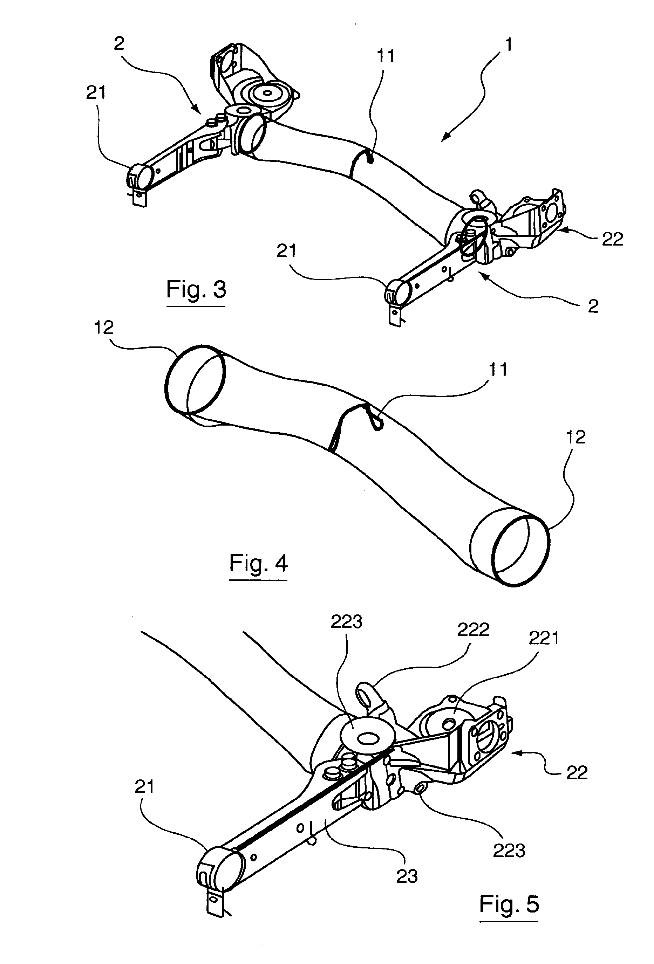

Ceci est illustré par la figure 3 qui illustre un essieu souple comprenant une traverse telle que celle qui vient d'être mentionnée, et reliant deux bras longitudinaux 2.

On rappelle que l'essieu est relié à la caisse du véhicule par des liaisons articulées à l'aide de douilles 21 portées par les bras longitudinaux 2, ces derniers présentant chacun, à leur extrémité opposée aux douilles 21, une tête d'essieu 22 destinée à porter une partie tournante.

Tel que cela apparaît sur la figure 5, chaque tête d'essieu 22 est, selon le présent mode de réalisation, solidarisée à :
- une coupelle de ressort 221 ;
- une chape 222 pour la fixation d'une barre Panhard (marque déposée) ;
- une pièce d'appui 223 pour une butée de choc.

Chaque tête d'essieu 22 présente en outre des moyens de fixation 223 destinés à la solidarisation d'un amortisseur sur l'essieu.

On note par ailleurs que chaque bras 2 comprend une partie avant (portant une douille 21) fixée par boulonnage sur une tête d'essieu 22.

En référence à la figure 4, une traverse d'un essieu selon l'invention présente en partie centrale une section trapézoïdale 11 (mise en évidence par un trait épaissi sur la figure 4).

De plus, la section de la traverse est évolutive de façon à se transformer progressivement de la forme trapézoïdale en partie centrale à une forme circulaire au niveau des sections d'extrémités 12.

En outre, la traverse 1 présente une forme cintrée. En d'autres termes, la traverse présente une déformation longitudinale réalisée de telle sorte que le centre d'inertie au niveau du plan médian de la traverse se trouver décalé par rapport à la droite qui relie les centres des sections d'extrémité circulaires 12.

Ainsi, sur une traverse telle que celle qui vient d'être décrite, le centre de torsion de la section centrale, et de toutes les sections connexes déformées, est décalé au maximum vers le haut pour obtenir le centre de torsion équivalent le plus haut possible.

Il faut entendre par centre de torsion équivalent de la traverse, l'intégrale des positions des centres de torsion de toutes les sections de la traverse.

Une traverse telle que celle représentée sur la figure 4 conduit à un formage par déformation de la traverse pour obtenir le désaxage maximum de la section centrale tout en conservant des rayons de cintrage les plus grands possible pour maîtriser le procédé de fabrication.

La figure 6 montre, selon une coupe transversale, le positionnement relatif de la section trapézoïdale 11 s'inscrivant dans le plan médian (noté Y = 0) de l'essieu par rapport aux sections d'extrémité 12.

On a porté sur cette figure les indications suivantes :
- I₀, qui représente le centre de torsion de la section médiane de l'essieu ;
- G₀, qui représente le centre d'inertie de la section médiane de l'essieu ;
- G₁, qui représente le centre d'inertie d'une section d'extrémité 12.

On note que, tel que cela apparaît clairement, les points I₀, G₀ et G₁ sont alignés.

De plus, la déformation par formage dans la direction Z conduit à des cotes H (entre G₀ et G₁) et d (entre I₀ et G₁) déterminées de façon à optimiser La position de I₀ selon la direction Z, c'est-à-dire de façon à maximiser la distance d.

Pour la fabrication d'un essieu selon le mode de réalisation qui vient d'être décrit, on réalise les étapes consistant à :
- tronçonner un tube de section circulaire à une longueur prédéterminée ;
- cintrer le tronçon tubulaire obtenu en le maintenant à ses deux extrémités et en appliquant, à l'aide d'une presse, une force sensiblement perpendiculaire à l'axe du tronçon ;
- déformer le tronçon cintré de façon qu'il présente une section évolutive dont la forme, en partie centrale du tronçon, est trapézoïdale.

On note que la phase de déformation est réalisée en deux étapes :
- l'une consistant à préparer une zone de transition entre la région centrale finale et une région de section circulaire (c'est-à-dire une région non déformée à l'issue de la phase de déformation) au voisinage des extrémités du tronçon ;
- l'autre consistant à emboutir le tronçon pré déformé de façon à obtenir la forme trapézoïdale souhaitée pour la section de la région centrale du tronçon.

## Revendications

1. Essieu souple pour véhicule automobile, comprenant une traverse (1) reliant deux bras longitudinaux (2), **caractérisé en ce que** ladite traverse (1) présente une section fermée, et **en ce que** ladite traverse présente, dans une région centrale, une section de forme trapézoïdale (11).

2. Essieu souple selon la revendication 1, **caractérisé en ce que** ladite traverse (1) présente une section évolutive.

3. Essieu souple selon les revendications 1 et 2, **caractérisé en ce que** ladite traverse (1) présente à chacune de ses extrémités une section circulaire (12).

4. Essieu souple selon l'une des revendications 2 et 3, **caractérisé en ce que** le centre d'inertie (G₀) de la section centrale de ladite traverse est distant d'une droite passant par les centres d'inertie (G₁) des sections d'extrémités (12) de ladite traverse (1).

5. Traverse destinée à relier deux bras longitudinaux d'un essieu souple de véhicule automobile, **caractérisé en ce qu'**elle présente une section fermée, et **en ce que** ladite traverse présente, dans une région centrale, une section de forme trapézoïdale (11).

6. Véhicule équipé d'un essieu souple pour véhicule automobile, comprenant une traverse (1) reliant deux bras longitudinaux (2), **caractérisé en ce que** ladite traverse présente une section fermée, et **en ce que** ladite traverse présente, dans une région centrale, une section de forme trapézoïdale (11).

7. Procédé de fabrication d'une traverse (1) destinée à relier deux bras longitudinaux (2) d'un essieu souple de véhicule automobile, **caractérisé en ce qu'**il comprend une étape consistant à déformer une traverse présentant une section fermée de façon que ladite traverse présente, dans une région centrale, une section de forme trapézoïdale (11).

8. Procédé de fabrication selon la revendication 7, **caractérisé en ce qu'**il comprend une phase de déformation de ladite traverse réalisée de façon que ladite traverse présente une section évolutive entre sa région centrale et ses deux sections d'extrémité.

9. Procédé de fabrication selon la revendication 8, **caractérisé en ce que** ladite phase de déformation est réalisée en deux étapes, l'une consistant à réaliser une pré-déformation dans au moins une zone de transition entre ladite région centrale et une région de section circulaire au voisinage d'au moins une de ses extrémités, l'autre étape consistant à poursuivre la déformation dans ladite région centrale pour lui donner sa forme finale.

10. Procédé de fabrication selon l'une quelconque des revendications 8 et 9, **caractérisé en ce que** ladite phase de déformation est réalisée par emboutissage.

11. Procédé de fabrication selon l'une quelconque des revendications 8 à 10, **caractérisé en ce qu'**il comprend une étape consistant à cintrer ladite traverse de façon que le centre d'inertie de la section centrale de ladite traverse soit distant d'une droite passant par les centres d'inertie des sections d'extrémités de ladite traverse.

## Claims

1. Flexible axle for a motor vehicle, comprising a cross-member (1) which connects two longitudinal arms (2), **characterised in that** the cross-member (1) has a closed cross-section, and **in that** the cross-member has, in a central region, a trapezoidal cross-section (11).

2. Flexible axle according to claim 1, **characterised in that** the cross-member (1) has a progressive cross-section.

3. Flexible axle according to claim 1 and claim 2, **characterised in that** the cross-member (1) has, at each of the ends thereof, a circular cross-section (12).

4. Flexible axle according to either claim 2 or claim 3, **characterised in that** the centre of inertia (G₀) of the central cross-section of the cross-member is remote from a straight line which extends via the centres of inertia (G₁) of the end cross-sections (12) of the cross-member (1).

5. Cross-member which is intended to connect two longitudinal arms of a flexible axle of a motor vehicle, **characterised in that** it has a closed cross-section and **in that** the cross-member has, in a central region, a trapezoidal cross-section (11).

6. Vehicle which is provided with a flexible axle for a motor vehicle, comprising a cross-member (1) which connects two longitudinal arms (2), **characterised in that** the cross-member has a closed cross-section and **in that** the cross-member has, in a central region, a trapezoidal cross-section (11).

7. Production method for a cross-member (1) which is intended to connect two longitudinal arms (2) of a flexible axle of a motor vehicle, **characterised in that** it comprises a step which involves deforming a cross-member which has a closed cross-section so that the cross-member has, in a central region, a trapezoidal cross-section (11).

8. Production method according to claim 7, **characterised in that** it comprises a phase for deformation of the cross-member which is carried out so that the cross-member has a progressive cross-section between the central region thereof and the two end cross-sections thereof.

9. Production method according to claim 8, **characterised in that** the deformation phase is carried out in two steps, one involving carrying out a pre-deformation in at least one transition zone between the central region and a region having a circular cross-section in the region of at least one of the ends thereof, the other step involving continuing the deformation in the central region in order to give it its final shape.

10. Production method according to either claim 8 or claim 9, **characterised in that** the deformation phase is carried out by means of deep drawing.

11. Production method according to any one of claims 8 to 10, **characterised in that** it comprises a step which involves bending the cross-member so that the centre of inertia of the central cross-section of the cross-member is remote from a straight line which extends via the centres of inertia of the end cross-sections of the cross-member.

## Patentansprüche

1. Biegsame Achse für ein Kraftfahrzeug, die eine Querstrebe (1) aufweist, welche zwei Längsarme (2) verbindet, **dadurch gekennzeichnet, dass** die besagte Querstrebe (1) einen geschlossenen Querschnitt aufweist und, dass die besagte Querstrebe in einem mittleren Bereich einen in etwa trapezförmigen Querschnitt (11) aufweist.

2. Biegsame Achse nach Anspruch 1, **dadurch gekennzeichnet, dass** die besagte Querstrebe (1) einen sich verändernden Querschnitt aufweist.

3. Biegsame Achse nach den Ansprüchen 1 und 2, **dadurch gekennzeichnet, dass** die besagte Querstrebe (1) an jedem Ende einen kreisförmigen Querschnitt (12) aufweist.

4. Biegsame Achse nach einem der Ansprüche 2 oder 3, **dadurch gekennzeichnet, dass** das Trägheitszentrum (G₀) des mittleren Querschnitts der besagten Querstrebe im Abstand von einer Geraden ist, die durch die Trägheitszentren (Gᵢ) der Endquerschnitte (12) der besagten Strebe (1) geht.

5. Querstrebe, welche zwei Längsarme einer biegsamen Achse für Kraftfahrzeuge verbindet, **dadurch gekennzeichnet, dass** sie einen geschlossenen Querschnitt aufweist und, dass die besagte Querstrebe in einem mittleren Bereich einen in etwa trapezförmigen Querschnitt (11) aufweist.

6. Fahrzeug, das mit einer biegsamen Achse für Kraftfahrzeuge ausgestattet ist, welche eine Querstrebe (1) aufweist, die zwei Längsarme (2) verbindet, **dadurch gekennzeichnet, dass** die besagte Querstrebe einen geschlossenen Querschnitt aufweist und, dass die besagte Querstrebe in einem mittleren Bereich einen in etwa trapezförmigen Querschnitt (11) aufweist.

7. Verfahren zum Herstellen einer Querstrebe (1), die zwei Längsarme (2) einer biegsamen Achse für Kraftfahrzeuge verbinden soll, **dadurch gekennzeichnet, dass** es einen Schritt umfasst, bei dem eine Querstrebe, die einen geschlossenen Querschnitt aufweist, so verformt wird, dass die besagte Querstrebe in einem mittleren Bereich einen in etwa trapezförmigen Querschnitt (11) aufweist.

8. Herstellungsverfahren nach Anspruch 7, **dadurch gekennzeichnet, dass** es einen Schritt zum Deformieren der besagten Querstrebe umfasst, wobei dieser Schritt derart ausgeführt wird, dass die besagte Querstrebe zwischen dem mittleren Bereich und beiden Endbereichen einen sich verändernden Querschnitt aufweist.

9. Herstellungsverfahren nach Anspruch 8, **dadurch gekennzeichnet, dass** der besagte Deformierungsschritt in zwei Schritten erfolgt, wobei der eine im Ausführen einer vorhergehenden Deformierung in mindestens einem Übergangsbereich zwischen dem besagten mittleren Bereich und einem Bereich mit kreisförmigem Querschnitt in der Nähe von mindestens einem seiner Enden und der andere Schritt im Fortführen der Deformierung im besagten mittleren Bereich besteht, um ihm seine endgültige Form zu verleihen.

10. Herstellungsverfahren nach einem der Ansprüche 8 oder 9, **dadurch gekennzeichnet, dass** der besagte Deformierungsschritt durch Tiefziehen erfolgt.

11. Herstellungsverfahren nach einem der Ansprüche 8 bis 10, **dadurch gekennzeichnet, dass** es einen Schritt aufweist, bei dem die besagte Querstrebe derart gebogen wird, dass das Trägheitszentrum des mittleren Querschnitts der besagten Querstrebe einen Abstand von einer Geraden aufweist, die durch die Trägheitszentren der Endquerschnitte der besagten Strebe geht.
